# EUROPEAN PATENT SPECIFICATION

(11) **EP 0 880 049 B1**
(45) Date of publication and mention of the grant of the patent: **17.01.2001**
(21) Application number: 98106383.7
(22) Date of filing: 07.04.1998
(51) Int. Cl.: G02F 1/13, G06F 1/16

(54) **Computer comprising a LCD device**
Rechner mit einem LCD-Gerät
Ordinateur comprenant un dispositif LCD

(30) Priority: 08.04.1997 KR 9712899; 17.04.1997 KR 9714278
(43) Date of publication of application: 25.11.1998
(60) Divisional application: 00115576.1
(73) Proprietor: LG ELECTRONICS INC., Seoul (KR); LG.PHILIPS LCD CO., LTD, Seoul (KR)
(72) Inventor: Yun, Hee Young, Kumi-shi, Kyungsangbook-do (KR); Moon, Kyo Hun, Kimcheon-shi, Kyungsangbook-do (KR); Lee, Byeong Yun, Changan-ku, Suwon-shi, Kyunnggi-do (KR); Kim, Yong Bum, Kumi-shi, Kyungsangbook-do (KR); Bang, Young Un, Ansan-shi, Kyunggi-do (KR)
(74) Representative: Viering, Jentschura & Partner

(56) References cited:
- EP-A- 0 454 120
- EP-A- 0 604 872
- JP-A- 7 199 180
- US-A- 5 216 411
- US-A- 5 233 502
- US-A- 5 276 589
- US-A- 5 479 285
- US-A- 5 504 605
- US-A- 5 568 357
- PATENT ABSTRACTS OF JAPAN vol. 017, no. 416 (P-1584), 3 August 1993 & JP 05 080334 A (ROHM CO LTD), 2 April 1993,
- "CELL SUPPORT ASSEMBLY WITHOUT SCREW" IBM TECHNICAL DISCLOSURE BULLETIN, vol. 37, no. 12, 1 December 1994, page 33 XP000487692
- "STRUCTURE DESIGN FOR LIQUID CRYSTAL DISPLAY MODULE" IBM TECHNICAL DISCLOSURE BULLETIN, vol. 39, no. 1, 1 January 1996, pages 71-73, XP000556325

## Description

The invention relates to a portable computer comprising a hinged cover with a liquid crystal display (LCD) board.

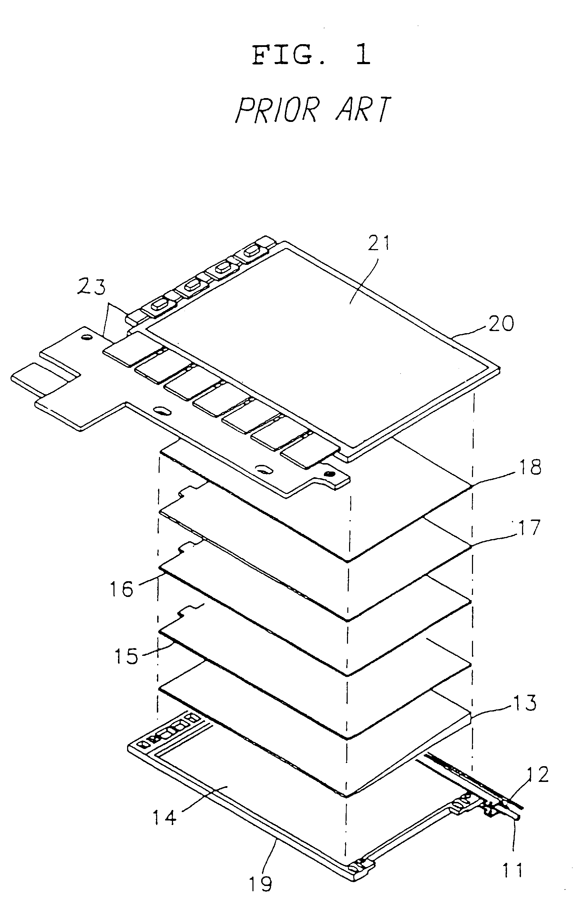

In general, a liquid crystal display (LCD) device used for a computer such as a portable computer or for a portable display is shown in Fig. 1. Referring to Fig. 1, the LCD device includes a liquid crystal panel 20 (LC panel), a back light unit, and a driving circuit board 23. The back light unit is comprised of a luminescent lamp 11, a lamp housing 12 having a U-shape and surrounding the lamp 11, a light guide 13, a reflector 14 reflecting the incident light from the horizontal direction to the vertical direction, a protection sheet 15 contacting the light guide 13, a first prism sheet 16 and a second prism sheet 17 set on the protecting sheet 15 and condensing the incident light from the light guide 13 to some direction, a diffuser 18 diffusing the light from the first and second prisms 16 and 17 to a viewing area 21 of the liquid crystal panel 20 with a certain viewing angle, and a first support frame 19 supporting these elements.

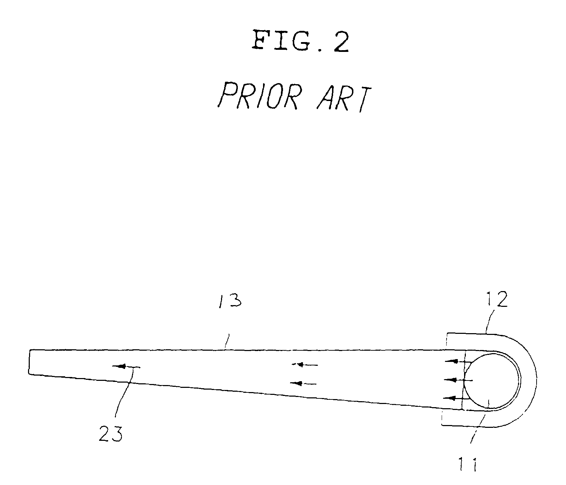

Fig. 2 shows a cross-sectional view of the light-guiding plate 13 showing a thickness which gradually decreases as it extends away from the light source 11. A fluorescent lamp 11 as the light source is fixed at a thicker end of the light-guiding plate 13. When the fluorescent lamp 11 is turned on, the light 23 from the source 11 is reflected by the lamp housing 12 surrounding the fluorescent lamp 11. The reflected light transmits through the cross-section towards the other side (thinner end) of the light-guiding plate 13 as indicated by the arrows. Then, the light spreads all over the surface of the light-guiding plate 13 and reaches the display area 21 (Fig. 1) through the diffusion plate 18. At the same time, a thin film transistor formed on the liquid crystal panel controls a corresponding pixel according to the signals from the driving circuit 30 (Fig. 1) to selectively transmit the light which collectively realizes the display of images on the display area.

The liquid crystal display is usually combined with, for example, a notebook computer as an output screen. The following method is used to fix the liquid crystal display to a device such as a notebook computer.

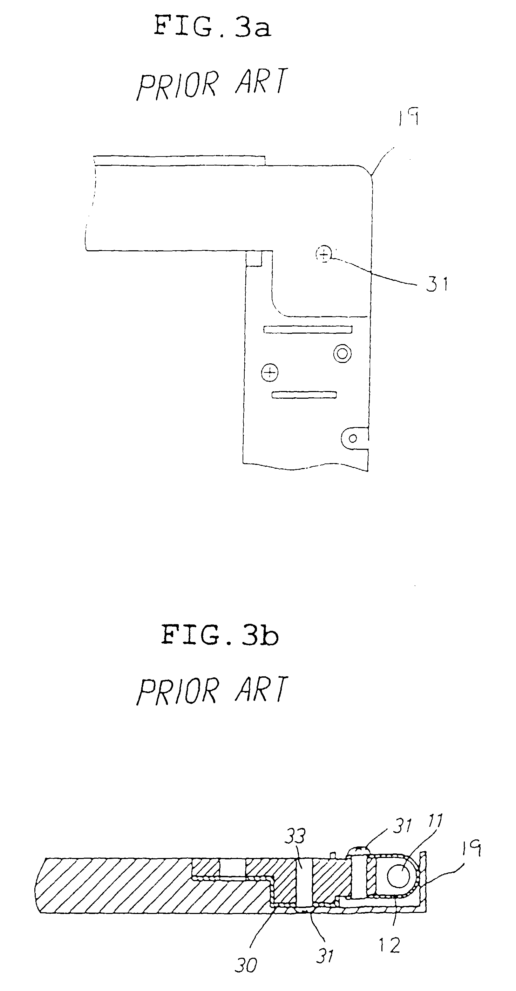

Referring to Figs. 3a and 3b, in a conventional liquid crystal display, a ground supporting plate 30 is disposed on the first support frame 19. A mounting hole 33 is formed through the ground supporting plate 30 and the first support frame 19, as shown in Fig. 3b. Then, the ground supporting plate 30 and the first support frame 19 are fixed by a screw 31 as shown in Fig. 3a. In other words, a liquid crystal display is fixed to a device such as a notebook computer so as to fasten the first support frame 19 and the ground supporting plate 30 by a fastening element such as a screw.

However, the liquid crystal display becomes thicker due to the length of the screw according to the method as shown in Figs. 3a and 3b. Moreover, since the mounting hole 33 for the screw is formed on the front surface of the liquid crystal display, the display area of the liquid crystal display becomes narrow.

According to the structure described above, the LCD device operates as follows. The light from the luminescent lamp 11 is incident on the rear surface of the liquid crystal panel 20 through the back light unit. A control circuit placed on the driving circuit board 23 controls the incident light on the viewing area 21 of the liquid crystal panel 20 to display images and characters.

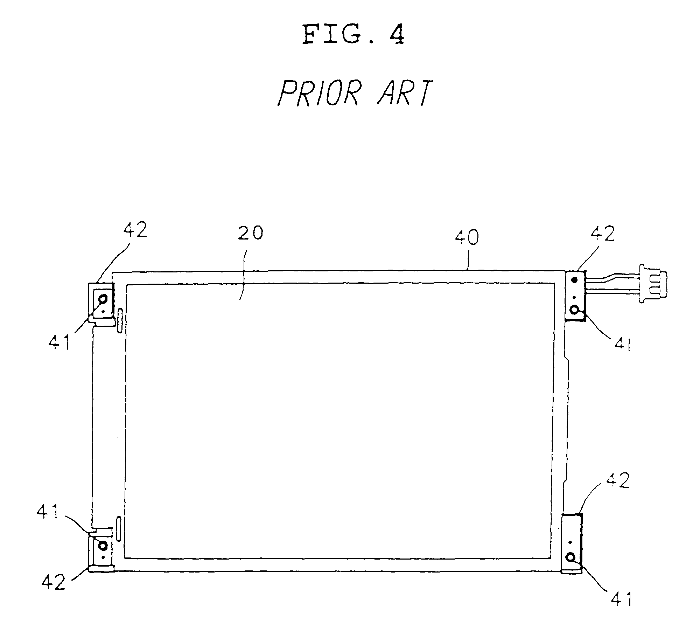

Fig. 4 is a drawing showing a plan view of the final assembly structure of the conventional liquid crystal display device. Fig. 4 also shows the assembled result of a second support frame 40, liquid crystal panel 20 and back light unit having an assembly structure for mounting to a portable computer. The second support frame 40 is made of metal or plastic, and holds the liquid crystal panel 20 and the back light unit. Here, the driving circuit board 23 is located behind the rear part of the back light unit connected to the liquid crystal panel 20 with a flexible film (not shown).

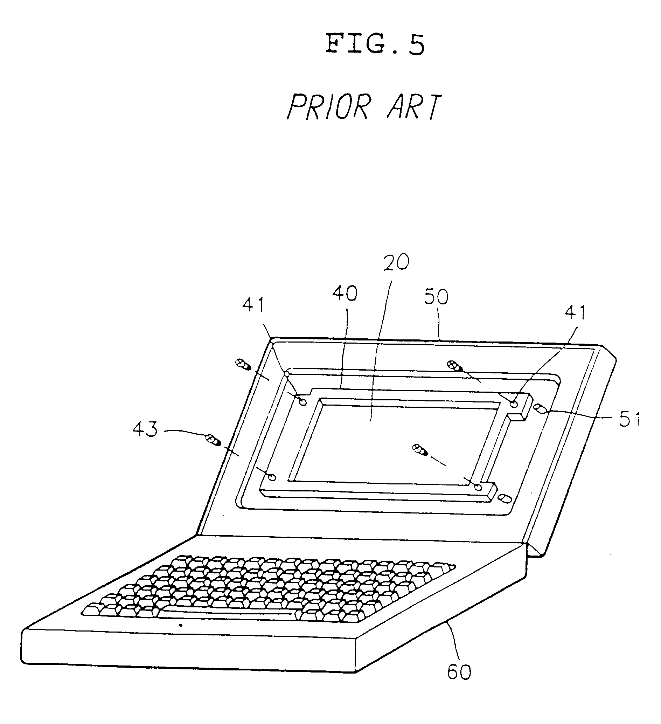

Fig. 5 shows the assembly structure of the liquid crystal panel 20 and body 60 of the portable computer in the conventional method. The second support frame 40 is mounted to a rear casing 50 of the portable computer using screws 43 extending through screw holes 41. A front case (not shown) having a blank area adjusted to the viewing area is joined at the rear casing 50. That is, the liquid crystal panel 20 is mounted with the rear casing 50 by the screws 43 locked in the normal direction of the display surface through the screw holes 41 formed on that surface. Although not shown in the drawings, the front case is mounted on the LCD device, opening the viewing area 21 and covering the other parts.

In general, as the size of the portable computer is designed for easy movement, the same goes for an A4 copy sheet, for example. Therefore, the ratio of the viewing area to the whole surface area of the display and the thickness of the display device affect the quality of the portable computer. However, in a conventional portable computer, screw holes 41 are located on edge portions of the display surface in order to join the second support frame 40 to the rear case 50. As the display area has a screw frame area 42 (Fig. 4) for forming the holes 41, the ratio of the area of the LC panel to the viewing area 21 is reduced.

Furthermore, in the conventional portable computer, as the screws 43 are locked to the liquid crystal display device and the rear case 50 in the normal direction of the display surface, the display part is thick enough to form an assembly device 51 for the screws 43, such as screw holes 41. The second support frame 40 is also large enough to have a space for supporting the screw holes 41. Thus, it is difficult to reduce the weight of the portable computer.

A portable computer comprising a similar LCD device and LCD board is disclosed in JP 7199180. The LCD board includes an LC panel and a backlight unit of the LC panel and a mounting frame, the backlight unit having a light source and forming with the LC panel a stacked plate assembly, substantially as described above with respect to fig. 1. The mounting frame extends along the edges of the display surface of the LC panel and the side walls of the stacked plate assembly, thereby accomodating and joining the stacked plate assembly. The monting frame is composed of an outer support frame and an inner support frame wherein the side walls of the outer and inner support frames overlap each other. The outer and inner support frames are attached to each other by a plurality of tongues which are cut out of the sidewall of the outer support frame and are bent into respective openings formed in the side wall of the inner support frame. The LCD board assembled in this way by its mounting frame is frontally laid in a cover of a portable computer and is frontally fastened to the cover by means of fastenening elements in the form of screws extending in a direction perpendicular to the plane of the outer display surface of the LCD board through lateral projections at the corners of the outer support frame of the board.

Accordingly, a liquid crystal device is needed having a high viewing ratio of the display, low weight, and reduced thickness for a computer, such as a portable computer.

Further, portable computers are known with a hinged cover joined with the main body of the portable computer, the cover being composed of an open frame member and an integrated display/input board within the frame member, wherein the display/input board may include an LC panel which is overlaid by a touch sensitive panel thereby also serving as an input surface of the board. The board may be hinged to the frame member by lateral hinge pins mounted at opposite sidewalls of the board to be rotated through 180° and locked in its rotational positions by lateral locking pins adjustable to engage in locking pin holes in a side wall of the board (EP-A2-0 454 120, US-A-5 233 502). In another embodiment of turnable display boards, the board is laterally inserted into a lateral recess of the pocket-like frame member while having releasable latch means on either side of the board for latching the board within the recess of the frame member (US-A-5 276 589). , the board can optionally be turned with the display/input surface facing the inner or outer sides of the cover. By having the display/input boards turnably mounted within the frame member, the bords may also serve as a display/input device when the cover is closed and the display/input surface of the board faces the outer side of the cover.

The present invention is directed to a portable computer that substantially obviates one or more of the problems due to limitations and disadvantages of the related art.

An object of the present invention is to enable to increase the ratio of the viewing area of the display of a portable computer to nearly the whole area of the mounting frame of the LCD board.

Another object of the present invention is to provide a portable computer having a thin, light weight display unit.

The invention is described in the claims.

The features and advantages of the invention will be set forth in the written description which follows, and in part will be apparent from the description, or may be learned by practice of the invention. The objectives and other advantages of the invention will be realized and attained by the structure particularly pointed out in the written description and claims hereof as well as the appended drawings.

A portable computer according to the invention may comprise a liquid crystal (LC) panel including a display area; backlight unit including a light source optically joined with the LC panel; an inner support frame coupled to a surface of the backlight unit and sides of the LC panel; an outer support frame coupled to edges of the LC panel and sides of the inner support frame; a casing frame of the hinged cover of a portable computer; and fastening pins joining together the inner support frame, the outer support frame, and the casing frame through the sides of the inner support frame, the outer support frame, and the casing frame.

The LCD board may comprise a first support frame having a first fastening member at a side surface of the first support frame; a reflector unit adjacent the first support frame; a light source adjacent to the reflector unit; a light guide unit adjacent the reflector unit; a protection unit adjacent the light guide unit; a prism unit adjacent the protection unit; a diffuser unit adjacent the prism unit; an LC panel adjacent the diffuser unit; and a second support frame having a second fastening member at a side surface of the second support frame, wherein the reflector unit, the protection unit, the prism unit, and the diffuser unit, the LC panel are between the first and second support frame, and the first and second support frame are attached to each other through the first and second fastening members through the side surfaces of the first and second support frames.

The accompanying drawings, which are included to provide a further understanding of the invention and are incorporated in and constitute a part of this specification, illustrate embodiments of the invention and together with the description serve to explain the principles of the invention.

In the drawings:
Fig. 1 is a perspective drawing showing the structure of the conventional LCD device;
Fig. 2 is a cross-sectional view of a light-guiding plate and a fluorescent lamp;
Fig. 3a is a plan view of an LCD showing a screw frame of a first fastening frame;
Fig. 3b is a cross-sectional view of an LCD illustrating a first fastening frame, a lamp housing, and ground support plates fixed together by a screw;
Fig. 4 shows a plan view of the final assembly structure of the LC panel, support frame, and back light unit in the conventional LCD device;
Fig. 5 shows an assembly structure of the LCD device in the conventional portable computer;
Fig. 6 is a perspective view showing the assembly structure of the parts of the LCD board of a portable computer in accordance with one embodiment of the present invention;
Fig. 7 is a perspective view of the assembly structure of an LCD board, a rear cover or casing frame, and a front cover in accordance with the present invention;
Fig. 8a and 8b are cross-sectional side views of an LCD board according to the present invention illustrating mounting holes at a side wall of the mounting frame, Fig. 8c showing a sectional part view along the section line in Fig. 8b; and
Fig. 9 shows an assembly structure of an LCD board and portable computer in accordance with the present invention.

Reference will now be made in detail to the preferred embodiments of the present invention, examples of which are illustrated in the accompanying drawings.

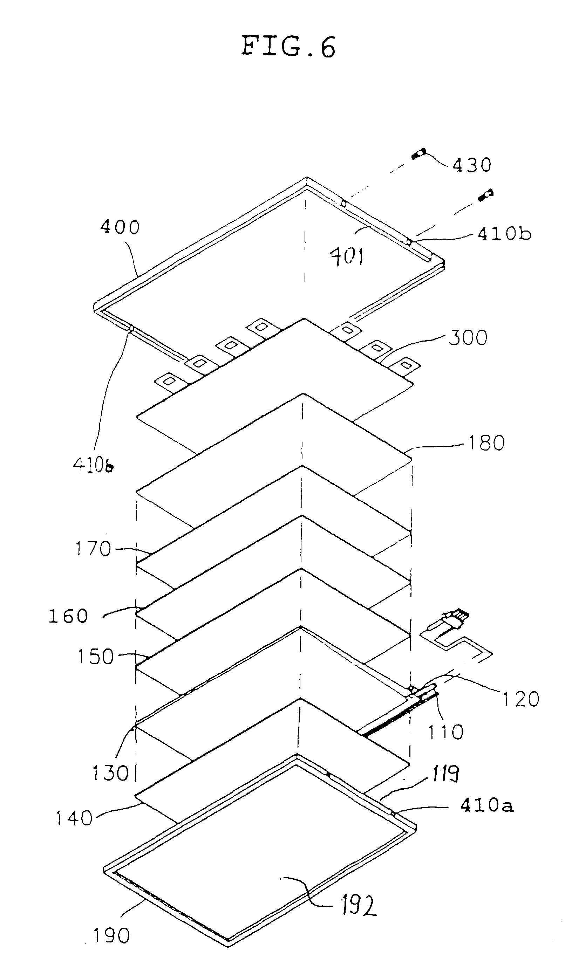

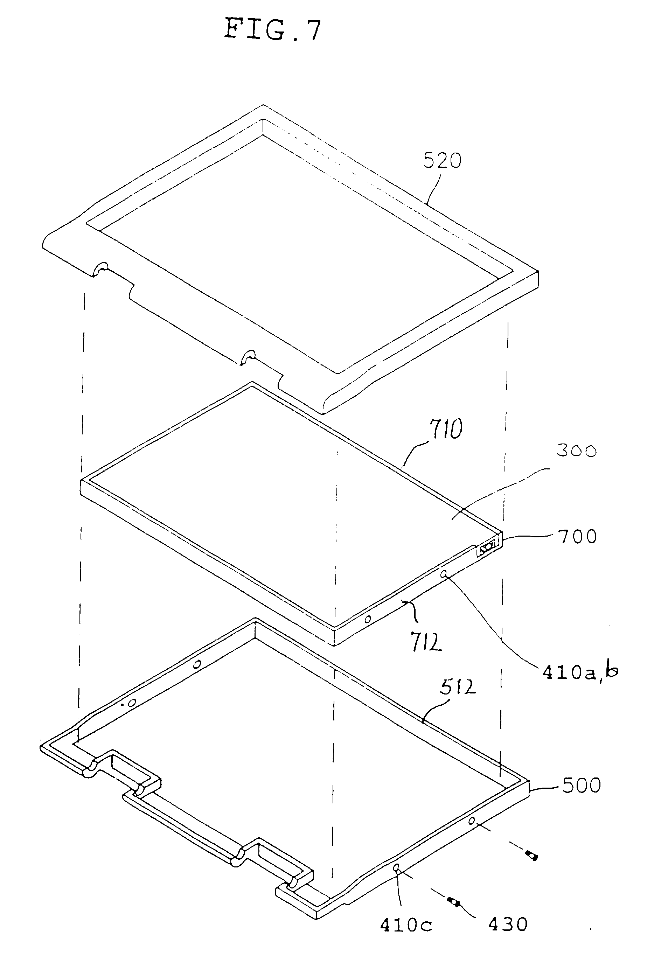

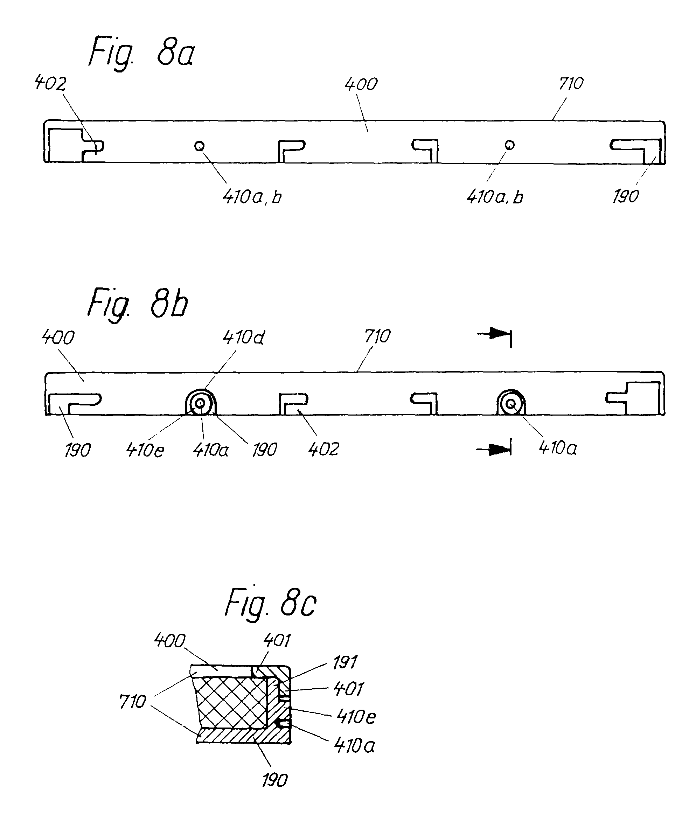

The present invention provides mounting pin holes for fastening pins on a side wall of an LCD board instead of on a front surface of an LCD board. For example, Fig. 8a and 8b show first mounting pin holes 410a formed on opposite side walls of a mounting frame 710. With reference to Fig. 6, the structure of an LCD board of a portable computer according to the present invention will be described in detail.

Referring to Fig. 6, on an inner support frame 190 made of plastic, for example, a reflector 140, a light guide 130, a protection sheet 150, a first prism sheet 160, a second prism sheet 170, a diffuser 180, and an LC panel 300 are stacked sequentially. The inner support frame has a bottom wall 192 and four side walls 191 extending at right angles from the bottom wall. On opposite side walls 191 of the inner support frame 190, a plurality of lateral first screw holes 410a are formed.

At the edge of the light guide 130, a luminescent lamp 110 and a lamp housing 120 are mounted. The lamp housing 120 has an U-shape and surrounds the luminescent lamp 110 at three sides adjacent to the respective side wall 191 of the inner support frame.

In order to join the inner support frame 190, the LC panel 300, the backlight unit 130-180 and the lamp housing 120, an outer support frame 400 preferably made of metal is mounted at the side wall of the inner support frame 190. When mounted, the outer support frame 400 and the inner support frame overlap each other at their side walls 401, 191. At the side wall 401 of the outer support frame 400, a plurality of second through holes 410b aligned with the first screw holes 410a as shown in Fig. 8a are formed.

Referring to Figs. 8a and 8b, the outer frame 400 and the inner frame 190 may be mounted together by a plurality of tongues 402 bent into respective depressions in the side wall of the inner frame 190. According to Figs. 8b and 8c, the side wall of the inner frame 190 is formed with a plurality of lugs 410e in which the screw holes 410a are formed and which extend through respective cutouts 410 of the side wall 401 of the outer frame 401.

Referring to Fig. 7, an LCD board 700 comprising the mounting frame 710 e.g. of the inner support frame 190 and the outer support frame 400 accomodating the LC panel 300 and the backlight unit (not shown in Fig. 7) is joined with a casing frame 500 at its side wall 712 and a front frame 520. At the side wall of the casing frame 500, third through holes 410c aligned with the first screw holes and second through holes 410a,b are formed. The casing frame 500 and the LCD board 700 are joined to each other by fastening devices such as clamping pins or screws 430, which extend through and may be locked to the second and third through holes 410b and 410c. Although not shown in the drawings, the screws 430 are locked with the first screw holes 410a.

Accordingly, in the present invention, the fastening pins are engaging the side walls of the display board and are not at the front or back side. The fastening pins are preferably screws. The direction of the fastening pins is normal to the side wall of the display board, that is, in parallel direction with the front (viewing) outer surface of the display board. Moreover, assembling devices may be formed on the upper and lower sides of the display.

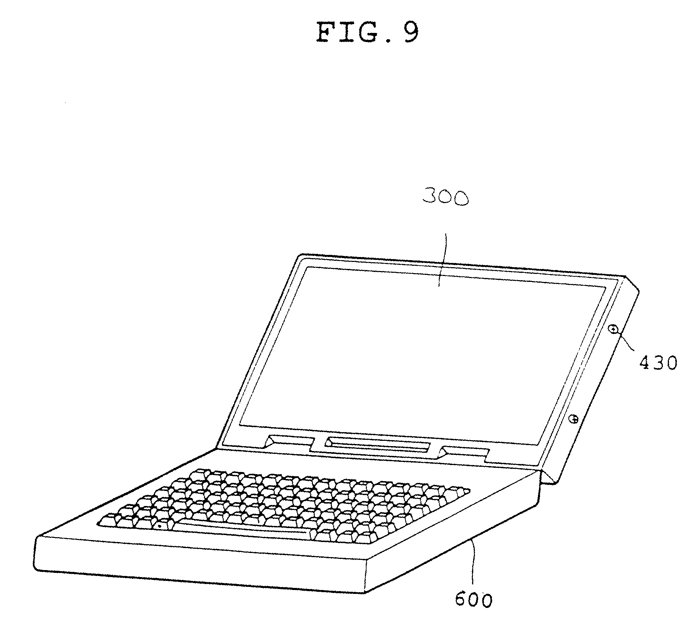

Referring to Fig. 9, the LCD board is mounted to a portable computer. One of the advantages of the portable computer or note book according to the present invention over the conventional portable computer is the higher proportion of the viewing area. Because there are no fastening elements on the display surface, the outer frame of the display area of the present invention is narrower than that of conventional ones. Thus, the proportion of the viewing area can be maximized and the thickness of the display part is made thinner than that of conventional ones.

Furthermore, as the volume of the frames of the present invention is smaller than that of conventional ones, the portable computer of the present invention is lighter.

## Claims

1. Portable computer comprising a hinged cover and an LCD board (700), the cover including a casing frame (500) in which the LCD board (700) is mounted, the LCD board including an LC panel (300), a backlight unit (130-180) of the LC panel and a mounting frame (710), the backlight unit having a light source (110, 120) and forming with the LC panel a stacked plate assembly, the mounting frame (710) extending along the edges (401) of the display surface of the LC panel (300) and the side walls of the stacked plate assembly thereby accomodating and joining the stacked plate assembly, wherein the LCD board (700) is fixed by its mounting frame (710) in the casing frame (500) by means of fastening pins (430), wherein the mounting frame (710) includes at at least one of the side walls (712) of the LCD board (700) a plurality of lateral mounting pin holes (410a) into which the fastening pins (430) are engaged, each of the mounting pin holes and the pins extending in a plane in parallel with the plane of the outer display surface of the board, each of the pins extending through one of adjoining through holes (410c) in respective side walls (512) of the casing frame (500).

2. Portable computer according to claim 1, the mounting frame (710) comprising an outer support frame (400) and an inner support frame (190) being attached to each other at their side walls (401, 191), the side walls of the outer support frame overlapping the side walls of the inner support frame, at least one of the side walls of the inner support frame being formed with said mounting pin holes (410a) being aligned with respective openings (410b, 410d) in the adjoining side wall of the outer support frame.

3. Portable computer according to claim 2, the inner support frame (190) including at its at least one side wall (191) a plurality of lugs (410e) formed with the mounting pin holes (410a), the respective openings (410d) in the adjoining side wall (401) of the outer support frame (400) being formed as a plurality of cutouts each of which receiving one of the lugs.

4. Portable computer according to one of claims 1 to 3, the pins being screwed pins or screws (430) and the mounting pin holes in the mounting frame being screw holes (410a).

5. Portable computer according to claim 4, the mounting frame (710) including at said at least one side wall (712) two lateral screw holes (410) into each of which a screw (430) is engaged, each of the screws extending through one of two through holes (410c) in a respective side wall (512) of the casing frame.

6. Portable computer according to one of claims 2 to 5, the backlight unit comprising:
a reflector unit (140) adjacent to the inner support frame (190);
the light source (110, 120) adjacent to the reflector unit;
a light guide unit (130) adjacent to the reflector unit;
a protection unit (150) adjacent to the light guide unit;
a prism unit (160, 170) adjacent to the protection unit;
a diffuser unit (180) adjacent to the prism unit;
the LC panel (300) being placed adjacent to the diffuser unit and between the diffusor unit and the outer support frame (190).

7. Portable computer according to any of claims 1 to 6, wherein the LCD board is laterally fastened in the casing frame (500) by the fastening pins (430) at opposite side walls of the LCD board.

8. Portable computer according to claim 2, the outer support frame (400) and the inner support frame (190) being mounted together by a plurality of tongues (402) bent into respective depressions formed in a side wall of the inner support frame (190).

## Patentansprüche

1. Tragbarer Computer mit einem gelenkig befestigten Deckel und einer LCD-Tafel (700), wobei der Deckel einen Gehäuserahmen (500) umfaßt, in welchem die LCD-Tafel (700) montiert ist, wobei die LCD-Tafel ein LC-Panel (Flüssigkristall-Panel oder - Feld) (300), eine Hintergrundbeleuchtungseinheit (130-180) des LC-Panels und einen Montagerahmen (710) aufweist, wobei die Hintergrundbeleuchtungseinheit eine Lichtquelle (110, 120) aufweist und mit dem LC-Panel eine Anordnung von gestapelten Platten bildet, wobei der Montagerahmen (710) sich entlang der Ränder (401) der Anzeigefläche des LC-Panels (300) und der Seitenwände der Anordnung von gestapelten Platten erstreckt und dadurch die Anordnung von gestapelten Platten beherbergt und verbindet, wobei die LCD-Tafel (700) mittels Festlegungsstiften (430) durch ihren Montagerahmen (710) in dem Gehäuserahmen (500) befestigt ist, wobei der Montagerahmen (710) an zumindest einer der Seitenwände (712) der LCD-Tafel (700) eine Mehrzahl von seitlichen Montagestiftlöchern (410a) umfaßt, in welche die Festlegungsstifte (430) eingerastet sind, wobei sich jedes der Montagestiftlöcher und die Stifte in einer Ebene erstrecken, die zur Ebene der äußeren Anzeigefläche der Tafel parallel ist, wobei jeder der Stifte sich durch eines der angrenzenden Durchgangslöcher (410c) in jeweiligen Seitenwänden (512) des Gehäuserahmens (500) erstreckt.

2. Tragbarer Computer nach Anspruch 1, wobei der Montagerahmen (710) einen äußeren Halterahmen (400) und einen inneren Halterahmen (190) aufweist, die an ihren Seitenwänden (401, 191) aneinandergeheftet sind, wobei die Seitenwände des äußeren Halterahmens mit den Seitenwänden des inneren Halterahmens überlappen, wobei zumindest eine der Seitenwände des inneren Halterahmens so ausgebildet ist, daß die Montagestiftlöcher (401a) an entsprechenden Öffnungen (410b, 410d) in der angrenzenden Seitenwand des äußeren Halterahmens ausgerichtet sind.

3. Tragbarer Computer nach Anspruch 2, wobei der innere Halterahmen (190) an seiner zumindest einen Seitenwand (191) eine Mehrzahl von mit den Montagestiftlöchern (410a) ausgebildeten Vorsprüngen (410e) umfaßt, wobei die entsprechenden Öffnungen (410d) in der angrenzenden Seitenwand (401) des äußeren Halterahmens (400) als eine Mehrzahl von Ausnehmungen ausgebildet sind, von denen jede einen der Vorsprünge aufnimmt.

4. Tragbarer Computer nach einem der Ansprüche 1 bis 3, wobei die Stifte Gewindestifte oder Schrauben (430) sind und die Montagestiftlöcher im Halterahmen Gewindelöcher (410a) sind.

5. Tragbarer Computer nach Anspruch 4, wobei der Montagerahmen (710) an der zumindest einen Seitenwand (712) zwei seitliche Gewindelöcher (410) aufweist, in die je eine Schraube (430) eingerastet ist, wobei sich jede der Schrauben durch eines von zwei Durchgangslöchern (410c) in einer entsprechenden Seitenwand (512) der Gehäuserahmens hindurch erstreckt.

6. Tragbarer Computer nach einem der Ansprüche 2 bis 5, wobei die Hintergrundbeleuchtungseinheit aufweist:
eine an den inneren Halterahmen (190) angrenzende Reflektoreinheit (140);
die an die Reflektoreinheit angrenzende Lichtquelle (110, 120);
eine an die Reflektoreinheit angrenzende Lichtleitereinheit (130);
eine an die Lichtleitereinheit angrenzende Schutzeinheit (150);
eine an die Schutzeinheit angrenzende Prismeneinheit (160, 170);
eine an die Prismeneinheit angrenzende Diffusoreinheit (180);
wobei das LC-Panel (300) an die Diffusoreinheit angrenzend und zwischen der Diffusoreinheit und dem äußeren Halterahmen (190) angeordnet ist.

7. Tragbarer Computer nach einem der Ansprüche 1 bis 6, wobei die LCD-Tafel an einander gegenüberliegenden Seitenwänden der LCD-Tafel mittels der Festlegungsstifte (430) seitlich in dem Gehäuserahmen (500) festgelegt ist.

8. Tragbarer Computer nach Anspruch 2, wobei der äußere Halterahmen (400) und der innere Halterahmen (190) durch eine Mehrzahl von Zungen (402), die in entsprechende in einer Seitenwand des inneren Halterahmens (190) ausgebildete Vertiefungen gebogen sind, zusammengebaut sind.

## Revendications

1. Ordinateur portatif comportant un couvercle à charnière et un tableau LCD (700), le couvercle comprenant un châssis de boîte (500) dans lequel le tableau LCD (700) est monté, le tableau LCD comprenant un panneau LC (panneau à cristal à liquide) (300), une unité d'éclairage de fond (130-180) du panneau LC et un châssis de montage (710), l'unité d'éclairage de fond ayant une source lumineuse (110, 120) et formant, avec le panneau LC, un arrangement de plaques empilées, le châssis de montage (710) s'étendant le long des bords (401) de la surface d'affichage du panneau LC (300) et des parois latérales de l'arrangement des plaques empilées et par ce moyen recevant et joignant l'arrangement des plaques empilées, dans lequel le tableau LCD (700) est fixé par son châssis de montage (710) dans le châssis de boîte (500) au moyen de chevilles de fixage (430), dans lequel le châssis de montage (710) comprend à au moins une des parois latérales (712) du tableau LCD (700) une pluralité de trous de cheville de montage (410a) dans lequels les chevilles de fixage (430) sont encliquetées, chacun des trous de cheville de montage s'étendent dans une plaine en parallèle avec la plaine de l'extérieure surface d'affichage du panneau, chacune des chevilles s'étendant au travers d'un d'adjacents trous de passage (410c) dans des respectives parois latérales (512) du châssis de boîte (500).

2. Ordinateur portatif selon la revendication 1, le châssis de montage (710) comportant un châssis de support extérieur (400) et un châssis de support intérieur (190) qui sont attachés l'un contre l'autre à leurs parois latérales (401, 191), les parois latérales du châssis de support extérieur recouvrant les parois latérales du châssis de support intérieur, au moins une des parois latérales du châssis de support intérieure étant formé avec lesdits trous de cheville de montage (410a) étant alignés avec des respectifs orifices (410b, 410d) dans l'adjacente paroi latérale du châssis de support extérieur.

3. Ordinateur portatif selon la revendication 2, le châssis de support intérieur (190) comprenant à sa au moins une paroi latérale (191) une pluralité de saillies (410e) formé avec les trous de cheville de montage (410a), les respectifs orifices (410d) dans l'adjacente paroi latérale (401) du châssis de support extérieur (400) étant formé à titre d'une pluralité de creux, chacun desquels est recevant une des saillies.

4. Ordinateur portatif selon l'une des revendications 1 à 3, les chevilles étant des vis sans tête ou des vis (430) et les trous de cheville de montage dans le châssis de montage sont des trous taraudés (410a).

5. Ordinateur portatif selon la revendication 4, le châssis de montage comprenant à ladite au moins une paroi latérale (712) deux trous de vis (410) latérales, dans chacun desquels une vis (430) est encliquetée, chacune des vis s'étendant au travers d'un de deux trous de passage (410c) dans une respective paroi latérale (512) du châssis de boîte.

6. Ordinateur portatif selon l'une des revendications 2 à 5, l'unité d'éclairage de fond comportant:
une unité de réflecteur (140) adjacente au châssis de support intérieur (190);
la source lumineuse (110, 120) adjacente à l'unité de réflecteur;
une unité de guide de lumière (130) adjacente à l'unité de réflecteur;
une unité de protection (150) adjacente à l'unité de guide de lumière;
une unité à prisme (160, 170) adjacente à l'unité de protection;
une unité diffuseur (180) adjacente à l'unité à prisme;
le panneau LC (300) étant placé adjacent à l'unité diffuseur et entre l'unité diffuseur et le châssis de support extérieur (190).

7. Ordinateur portatif selon l'une des revendications 1 à 6, dans lequel le tableau LCD est latéralement fixé dans le châssis de boîte (500) au moyens des chevilles de fixage à des opposées parois latérales du tableau LCD.

8. Ordinateur portatif selon la revendication 2, dans lequel le châssis de support extérieur (400) et le châssis de support intérieur (190) sont assemblés au moyens d'une pluralité de lames (402) qui sont pliées dans des respectives dépressions formé dans une paroi latérale du châssis de support intérieur (190).
